# EUROPÄISCHE PATENTSCHRIFT

(11) **EP 3 527 467 B1**
(45) Veröffentlichungstag und Bekanntmachung des Hinweises auf die Patenterteilung: **19.08.2020**
(21) Anmeldenummer: 19154818.9
(22) Anmeldetag: 31.01.2019
(51) Int. Cl.: B62D 25/20, B62D 33/04, B60P 3/20

(54) **LADERAUMBODEN FÜR NUTZFAHRZEUGE**
LOAD AREA FLOOR FOR COMMERCIAL VEHICLES
FOND D'ESPACE DE CHARGEMENT POUR VÉHICULES UTILITAIRES

(30) Priorität: 15.02.2018 DE 102018001178
(43) Veröffentlichungstag der Anmeldung: 21.08.2019
(73) Patentinhaber: Fahrzeugwerk Bernard Krone GmbH & Co. KG, 49757 Werlte (DE)
(72) Erfinder: Thiel, Mario, 19273 Teldau (DE)
(74) Vertreter: Pott, Ulrich

(56) Entgegenhaltungen:
- EP-A1- 2 123 542
- DE-A1-102010 050 891
- US-A- 3 229 438
- US-A1- 2005 152 774

## Beschreibung

Die Erfindung bezieht sich auf einen Laderaumboden für Nutzfahrzeuge, insbesondere für Kühlnutzfahrzeuge, mit oberen, das Ladegut aufnehmenden Bodenplatten aus einem Leichtmetallwerkstoff, insbesondere aus einem Aluminiumwerkstoff, die sich in Längsrichtung des Laderaumbodens erstrecken und miteinander verschweißt sind und sich auf einer unteren Tragschicht abstützen.

Ein Laderaumboden der vorgenannten Art ist aus der EP 2 123 542 B1 bekannt. Dabei sind die Bodenplatten als sich über die Länge des Laderaumbodens erstreckende Formteile aus einem Leichtmetallwerkstoff ausgebildet, die mit ihren Längsseiten stumpf aneinanderliegen und mit einer Reibrührschweißung miteinander verbunden sind.

Durch die fertigungstechnisch unvermeidbare längsseitige Ungeradheit der Bodenplatten mit säbelförmigen oder welligen Verformungen erfahren die Bodenplatten durch das notwendige Verspannen und die Verschweißungen innere Spannungen, die in die verschweißten Bauteile eingebracht werden. Dies führt in sehr nachteiliger Weise zu Problemen bei der Weiterverarbeitung der verschweißten Bodenplatten. Diese sind nach dem Verschweißen wellig und lassen sich nicht passgenau in andere Bauteile einfügen.

Es ist Aufgabe der vorliegenden Erfindung, einen Laderaumboden mit in handhabungstechnisch einfacher Weise zu verarbeitenden Bodenplatten zu schaffen, die sich passgenau in andere Bauteile einfügen lassen.

Zur Lösung dieser Aufgabe zeichnet sich der Laderaumboden durch die im Patentanspruch 1 angegebenen Merkmale aus. Hinsichtlich wesentlicher weiterer Ausgestaltungen wird auf die Patentansprüche 2 bis 7 verwiesen.

Damit ist ein Laderaumboden geschaffen, bei dem durch den eine benachbarten Bodenplatte überlappenden Schenkel an der Längsaußenseitenkante einer Bodenplatte mit dem daruntergelegenen Freiraum, in den das benachbarte Ende der Längsaußenseitenkante der benachbarten Bodenplatte in diesen Aufnahmeraum eintauchen kann, ein Toleranzausgleichsraum geschaffen ist. Während der Verschweißung der beiden Bodenplatten, insbesondere über einen Reibrührschweißvorgang in einer Ausbildung als Kehlnahtausführung, kann durch eine automatische Positionserkennung der Ungeradheit der Aluminiumprofile an der Längsaußenseitenkante diese Ungeradheit ausgeglichen werden, indem z. B. eine Schweißspindel eines Schweißautomaten in ihrer Position dem Längsaußenseitenkantenverlauf des in den Aufnahmeraum und damit in den Toleranzausgleichsraum eingetauchten Endes der benachbarten Bodenplatte nachgeführt wird.

Damit ist es möglich, alle Bodenplatten, also vorzugsweise alle Profile, schneller zu einer kompletten Bodenplatte in einer Schweißvorrichtung zusammenzufügen. Es erfolgt ein gleichzeitiges Einlegen aller zu einem Boden gehörigen Aluminiumprofile, beispielsweise der benötigen neun Profile. Eine Einspannung braucht nur senkrecht ohne Verformung der Aluminiumprofile im Gegensatz zum Stand der Technik zu erfolgen, weil dort auch noch quer eingespannt werden muss, um die Profile so eng aneinander zu drücken, dass die maximal erlaubte Spaltbreite zwischen den Profilen von 1 mm eingehalten wird. Somit auch ist es dort notwendig, dass aufgrund der stumpf aneinandergeschweißten Ausführung nach jedem einzelnen Profil gespannt und geschweißt wird.

Damit lassen sich bei dem Laderaumboden nach der vorliegenden Erfindung durch die vorgesehenen Toleranzausgleichsräume, die durch die überlappenden Schenkel und den darunterliegenden Aufnahmeraum geschaffen sind, mit sehr einfachen baulichen Mitteln wesentliche Vorteile nicht nur beim Herstellungsprozess erzielen, sondern auch bei dem gefertigten Laderaumboden, da innere Spannungen und Welligkeiten vermieden sind.

Weitere Vorteile der Erfindung ergeben sich aus der nachfolgenden Beschreibung und den Zeichnungen. In der Zeichnung zeigen:
- Fig. 1:: eine Seitenansicht auf ein Ausführungsbeispiel eines Nutzfahrzeuges mit einem Ausführungsbeispiel eines Laderaumbodens nach der Erfindung;
- Fig. 2:: eine Querschnittsdarstellung auf das Nutzfahrzeug gemäß der Schnittlinie A-A in Fig. 1;
- Fig. 3:: vergrößert die Einzelheit Z in Fig. 2;
- Fig. 4:: vergrößert zwei aneinanderliegende Bodenplatten mit Toleranzausgleichsraum, und
- Fig. 5:: perspektivisch ausschnittsweise zwei aneinandergefügte Bodenplatten des Laderaumbodens.

In den Zeichnungen sind übereinstimmende Teile mit übereinstimmenden Bezugsziffern versehen.

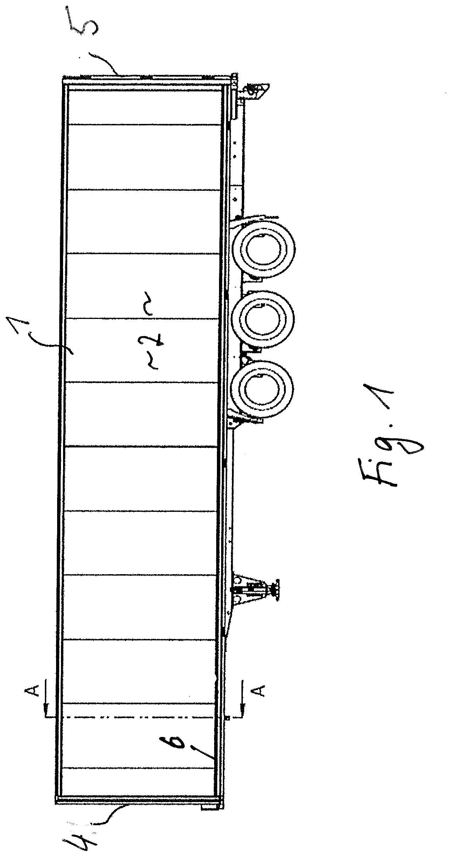

Allgemein mit 1 ist in Fig. 1 ein Nutzfahrzeug beziffert mit einem Kühlkofferaufbau 1, mit Seitenwänden 2 und 3, einer Vorderwandung 4 und einer Rückwandung 5, die bevorzugt als verschwenkbare Türflügel ausgebildet ist. Dieser Kofferaufbau 1 des Nutzfahrzeuges hat einen Laderaumboden 6 mit Bodenplatten 7 und einer Tragschicht 8 aus beispielsweise einem Holzmaterial.

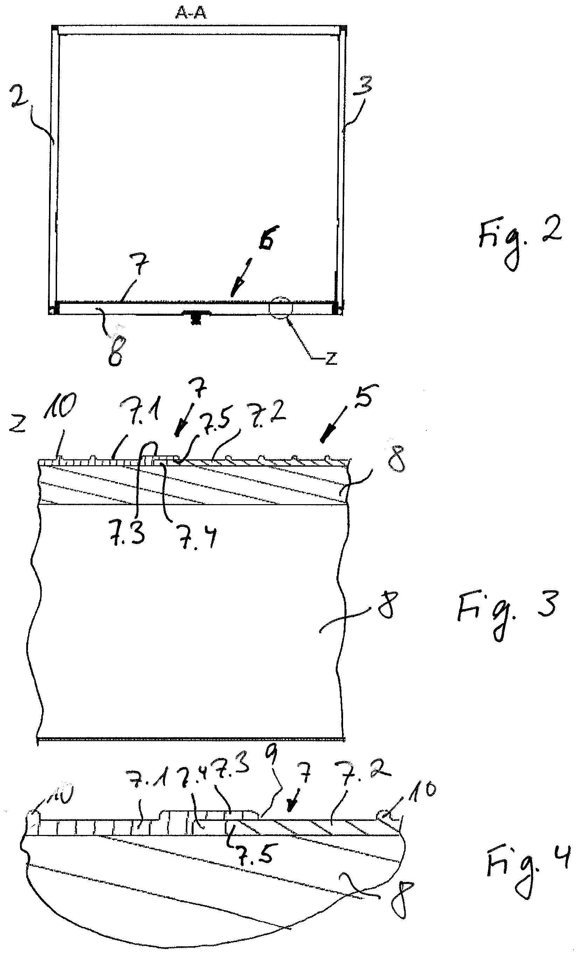

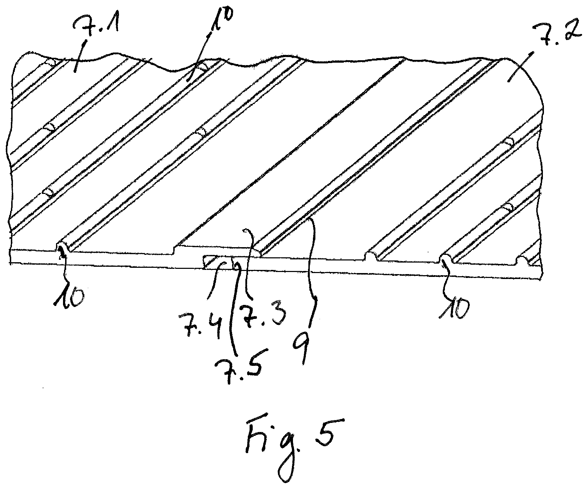

Wie näher aus den Fig. 3 bis 5 hervorgeht, werden die Bodenplatten durch benachbarte Bodenplatten 7.1 und 7.2 gebildet, wobei die in Fig. 3 und 4 jeweils links gezeigte Bodenplatte 7.1 einen Schenkel 7.3 und einen darunterliegenden Aufnahmeraum 7.4 ausbildet. In diesen Aufnahmeraum 7.4 taucht das längsaußenseitenkantige Ende 7.5 der benachbarten Bodenplatte 7.2 ein, so dass dieser Aufnahmeraum 7.4 einen Toleranzausgleichsraum bildet, in dem beim Schweißvorgang automatisch etwaige Ungenauigkeiten an der Längsaußenseitenkante der Bodenplatte 7.2 automatisch durch Nachführung einer Schweißspindel berücksichtigt werden können. Dadurch werden Spannungen innerhalb der Schweißnaht auch beim nachfolgenden Abkühlen wirksam vermieden bzw. wesentlich verringert.

Im Aufnahmeraum 7.4 können die Bodenplatten 7.1 und 7.2 mittels einer Reibrührschweißung in Kehlnahtausführung miteinander verbunden sein. Die Schweißnaht 9 erfolgt als FSW-Schweißung (Reibrührschweißung). Die Bodenplatten 7 sind mit einer Profilierung 10 versehen.

## Patentansprüche

1. Laderaumboden (6) für Nutzfahrzeuge (1), insbesondere für Kühlnutzfahrzeuge, mit oberen, das Ladegut aufnehmenden Bodenplatten (7, 7.1, 7.2) aus einem Leichtmetallwerkstoff, insbesondere aus einem Aluminiumwerkstoff, die sich in Längsrichtung des Laderaumbodens (6) erstrecken und miteinander verschweißt sind und sich auf einer unteren Tragschicht (8) abstützen, **dadurch gekennzeichnet, dass** zumindest eine der Bodenplatten (7.1) an einer Längsaußenseitenkante mit einem parallel zur Bodenplatte (7.1) ausgerichteten endseitigen Schenkel (7.3) und einem unterhalb des Schenkels gelegenen, parallel zur Bodenplatte (7.1) ausgerichteten Aufnahmeraum (7.4) ausgebildet ist, wobei der endseitige Schenkel (7.3) ein längsaußenkantenseitiges Ende (7.5) einer benachbarten Bodenplatte (7.2) übergreift und dieses übergriffene längsaußenseitenkantige Ende (7.5) der benachbarten Bodenplatte (7.2) in den Aufnahmeraum (7.4) unterhalb des überlappenden Schenkels (7.3) in paralleler Ausrichtung zur Bodenplatte (7.1) eingreift, wobei der Aufnahmeraum (7.4) einen Toleranzausgleichsraum bildet.

2. Laderaumboden (6) nach Anspruch 1, **dadurch gekennzeichnet, dass** zwischen jedem Paar von zwei aneinandergelegten Bodenplatten (7) eine Bodenplatte (7.1) an der Längsaußenseitenkante mit einem endseitigen Schenkel (7.3) und dem unterhalb des Schenkels gelegenen Aufnahmeraum (7.4) sowie die benachbarte Bodenplatte (7.2) mit dem längsaußenseitigen Ende (7.5) zur Anordnung in dem Aufnahmeraum (7.4) ausgebildet ist.

3. Laderaumboden (6) nach Anspruch 1 oder 2, **dadurch gekennzeichnet, dass** die Bodenplatten (7) miteinander durch eine Reibrührverschweißung (9) miteinander verschweißt sind.

4. Laderaumboden (6) nach Anspruch 3, **dadurch gekennzeichnet, dass** die Reibrührverschweißung (9) in Kehlnahtausführung ausgebildet ist.

5. Laderaumboden (6) nach einem der Ansprüche 1 bis 4, **dadurch gekennzeichnet, dass** die aneinander gelegten Bodenplatten (7) innerhalb des Aufnahmeraumes (7.4) toleranzausgeglichen entsprechend der Ungeradheit von Längsaußenseitenkanten angeordnet sind.

6. Laderaumboden (6) nach einem der vorherigen Ansprüche, **dadurch gekennzeichnet, dass** die Bodenplatten (7) als Aluminiumstrangpressprofile ausgebildet sind mit einer Profilierung (10) auf ihrer Oberseite.

7. Laderaumboden (6) nach Anspruch 6, **dadurch gekennzeichnet, dass** die Profilierung (10) in Längsrichtung der Bodenplatten (7) ausgerichtet ist.

## Claims

1. Load compartment floor (6) for commercial vehicles (1), in particular for refrigerated commercial vehicles, with upper floor panels (7, 7.1, 7.2), which receive the loaded goods, are made of lightweight metal material, in particular of an aluminium material, which extend in the longitudinal direction of the load compartment floor (6) and are welded together and are supported on a lower carrier layer (8), **characterised in that** at least one of the floor panels (7.1) is formed at a longitudinal outer side edge with an end limb (7.3) aligned parallel to the floor panel (7.1) and a receiving space (7.4) located below the limb and aligned parallel to the floor panel (7.1), wherein the end limb (7.3) overlaps a longitudinal outer edge-side end (7.5) of an adjacent floor panel (7.2) and this overlapped, longitudinal outer side edge end (7.5) of the adjacent floor panel (7.2) engages into the receiving space (7.4) under the overlapping limb (7.3) in a parallel alignment to the floor panel (7.1), wherein the receiving space (7.4) forms a tolerance compensation space.

2. Load compartment floor (6) according to claim 1, **characterised in that** between each pair of two floor panels (7) adjacent to one another is formed a floor panel (7.1) at the longitudinal outer side edge with an end limb (7.3) and the receiving space (7.4) located under the limb and the adjacent floor panel (7.2) is formed with the longitudinal outer-side end (7.5) for arrangement in the receiving space (7.4).

3. Load compartment floor (6) according to claim 1 or 2, **characterised in that** the floor panels (7) are welded together by a frictional stir weld connection (9).

4. Load compartment floor (6) according to claim 3, **characterised in that** the frictional stir weld connection (9) is formed in a fillet weld configuration.

5. Load compartment floor (6) according to any one of claims 1 to 4, **characterised in that** the floor panels (7) adjacent to one another are arranged inside of the receiving space (7.4) so as to compensate tolerances corresponding to the unevenness of longitudinal outer side edges.

6. Load compartment floor (6) according to any one of the preceding claims, **characterised in that** the floor panels (7) are formed as extruded aluminium profiles with a profiling (10) on their upper side.

7. Load compartment floor (6) according to claim 6, **characterised in that** the profiling (10) is aligned in the longitudinal direction of the floor panels (7).

## Revendications

1. Fond d'espace de chargement (6) pour véhicules utilitaires (1), en particulier pour véhicules utilitaires frigorifiques, comprenant des plaques de fond supérieures (7, 7.1, 7.2) recevant le chargement, qui sont composées d'un matériau en métal léger, en particulier d'un matériau en aluminium, qui s'étendent dans la direction longitudinale du fond d'espace de chargement (6) et sont soudées ensemble et qui s'appuient sur une couche support inférieure (8), **caractérisé en ce qu'**au moins une des plaques de fond (7.1) est configurée sur un bord latéral extérieur longitudinal avec une traverse d'extrémité latérale (7.3) orientée parallèlement à la plaque de fond (7.1) et avec un espace de réception (7.4) placé en-dessous de la traverse et orientée parallèlement à la plaque de fond (7.1), la traverse d'extrémité latérale (7.3) chevauchant une extrémité latérale de bord extérieur longitudinal (7.5) d'une plaque de fond (7.2) adjacente et s'appliquant sur cette extrémité de bord latéral extérieur longitudinal chevauchée (7.5) de la plaque de fond (7.2) adjacente dans l'espace de réception (7.4) en-dessous de la traverse de chevauchement (7.3) dans l'orientation parallèle à la plaque de fond (7.1), l'espace de réception (7.4) formant un espace de compensation des tolérances.

2. Fond d'espace de chargement (6) selon la revendication 1, **caractérisé en ce que**, entre chaque paire de deux plaques de fond (7) juxtaposées, une plaque de fond (7.1) est configurée sur le bord latéral extérieur longitudinal avec une traverse d'extrémité latérale (7.3) et avec l'espace de réception (7.4) placé en-dessous de la traverse, et la plaque de fond (7.2) adjacente est configurée avec l'extrémité latérale extérieure longitudinale (7.5) à disposer dans l'espace de réception (7.4).

3. Fond d'espace de chargement (6) selon la revendication 1 ou 2, **caractérisé en ce que** les plaques de fond (7) sont soudées les unes avec les autres par soudage par friction malaxage (9).

4. Fond d'espace de chargement (6) selon la revendication 3, **caractérisé en ce que** le soudage par friction malaxage (9) est configuré dans une réalisation par soudure d'angle.

5. Fond d'espace de chargement (6) selon une des revendications 1 à 4, **caractérisé en ce que** les plaques de fond (7) placées les unes contre les autres à l'intérieur de l'espace de réception (7.4) sont disposées avec une compensation des tolérances des défauts de planéité des bords latéraux extérieurs longitudinaux.

6. Fond d'espace de chargement (6) selon une des revendications précédentes, **caractérisé en ce que** les plaques de fond (7) sont configurées sous forme de profilés extrudés en aluminium avec un profilage (10) sur leur face supérieure.

7. Fond d'espace de chargement (6) selon la revendication 6, **caractérisé en ce que** le profilage (10) est orienté dans la direction longitudinale des plaques de fond (7).
